# EUROPEAN PATENT APPLICATION

(11) **EP 4 528 227 A1**
(43) Date of publication of application: **26.03.2025**
(21) Application number: 23306547.3
(22) Date of filing: 19.09.2023
(51) Int. Cl.: G01D 5/353, G01H 9/00, H04B 10/291

(54) **MULTI-SEGMENT DISTRIBUTED OPTICAL FIBER SENSING SYSTEM WITH SEGMENTS HAVING OPTICAL SENSOR AND OPTICAL RELAY FIBERS**

(71) Applicant: Alcatel Submarine Networks, 91620 Nozay (FR)
(72) Inventor: Ronnekleiv, Erlend, 7052 Trondheim (NO); Sorgard, Trygve, 7075 Tiller (NO); Klimentov, Dmitry, 7224 Melhus (NO); Tolstik, Nikolai, 7071 Trondheim (NO); Brenne, Jan Kristoffer, 7048 Trondheim (NO)
(74) Representative: Loyer & Abello

(57) **Abstract**

A distributed fiber optic sensor includes an optical fiber line and an optical interrogator connected to transmit probe light to the optical fiber line. The optical fiber line comprises a sequence of optical segments, some of the optical segments having both a relay optical fiber and a sensor optical fiber, first ends of the relay and sensor optical fibers being optically connected to a previous one of the optical segments of the sequence, a second end of the relay optical fiber being optically connected to a subsequent one of the optical segments of the sequence. Tthe optical fiber line is configured to cause optical amplification of the probe light along and/or between the optical segments. The optical interrogator is connected to receive part of the probe light back scattered in each sensor optical fiber of the optical segments.

## Description

### TECHNICAL FIELD

The present disclosure relates to distributed optical sensing and apparatus for use therein.

### BACKGROUND

Optical fibers can be used as distributed sensors. In a typical implementation, an optical interrogating device sends a sequence of suitably prepared probe optical pulses into an optical fiber, and measures parts of the optical pulses that are returned back to the interrogator by reflectors distributed along the optical fiber. The reflectors are typically either approximately randomly formed during fabrication of the optical fiber (e.g. causing Raleigh scattering) or are intentionally formed therein (e.g. fiber Bragg gratins, "FBGs"). Applications of such sensors include but are not limited to detection and/or mapping of ambient disturbances, such as naturally occurring or man-induced mechanical vibrations, temperature and/or pressure variations, etc., both in marine and terrestrial environments. Example marine applications relate to monitoring of submarine power and telecom cables.

European patent application EP4160941, entitled "Distributed Sensing and Monitoring Using Amplified Optical Links", describes distributed sensing along an amplified multi-span optical fiber link with wavelength-selective optical loopback paths in the optical repeaters thereof.

### SUMMARY OF SOME SPECIFIC EMBODIMENTS

An aspect of the present disclosure provides an apparatus. The apparatus comprises a distributed fiber optic sensor comprising an optical transmitter, an optical receiver, and an optical fiber line. The optical fiber line comprises a sequence of optical segments, some of the optical segments having both a relay optical fiber and a sensor optical fiber, first ends of the relay and sensor optical fibers being optically connected to a previous one of the optical segments of the sequence, a second end of the relay optical fiber being optically connected to a subsequent one of the optical segments of the sequence. The optical fiber line is configured to cause optical amplification of light along and/or between the optical segments. The distributed fiber optic sensor is connected to receive light back scattered in the sensor optical fiber.

### BRIEF DESCRIPTION OF THE DRAWINGS

Embodiments disclosed herein will be described in greater detail with reference to the accompanying drawings which represent example embodiments thereof, in which like elements are indicated with like reference numerals, and wherein:
FIG. 1 is a schematic block diagram of a distributed optical fiber sensor including a multi-segment optical fiber relay line and a plurality of separate sensor optical fibers connected therealong;
FIG. 2 is a schematic block diagram illustrating an example implementation of an optical fiber system of the distributed optical fiber sensor of FIG. 1;
FIGs. 3A-3D are schematic block diagrams illustrating example implementations of wavelength-selective add-couplers for collecting back-scattered light from the sensor optical fibers of the distributed optical fiber sensor of FIG. 5;
FIGs. 4A and 4B are graphs illustrating example time division multiplexing schemes to separately interrogate several sensor optical fibers using different wavelength channels;
FIG. 5 is a schematic block diagram of a multi-channel implementation of an optical fiber interrogating apparatus of FIG. 1;
FIG. 6 is a schematic block diagram of a single-channel interrogator that may be used in embodiments of the apparatus of FIG. 5;
FIG. 7A is a graph illustrating an example sequence of optical probe pulses of different wavelength channels that may be generated by the apparatus of FIG. 6 for interrogating a 16-span optical fiber system;
FIG. 7B is a graph illustrating an example modulation of load light channels accompanying the sequence of probe optical pulses of FIG. 7A;
FIG. 8 is a schematic block diagram of an example apparatus for providing load light along with the probe light, which may be used in some embodiments of the distributed optical fiber sensor of FIG. 1 or FIG. 2;
FIG. 9A is a graph illustrating an example time-averaged optical spectrum of the load and probe light of FIGs. 7A and 7B at an output of an optical amplifier of an outbound optical fiber line of the 16-span optical fiber system;
FIG. 9B is a graph illustrating an evolution of the time-averaged optical spectrum of FIG. 9A at an output of a return-path optical amplifier of the 16-span optical fiber system in an example embodiment;
FIG. 10 is a graph illustrating temporal evolution of expected back-scattering response of the 16-span optical fiber system to the sequence of probe light pulses of FIG. 7A;
FIG. 11 is a schematic diagram illustrating a part of an optical loop-back path of FIG. 2 with a load light bypass;
FIG. 12 is a graph illustrating an example sequence of partially-overlapping probe optical pulses of different wavelength channels that may be generated by the apparatus of FIG. 6 for interrogating a 16-span optical fiber system;
FIG. 13 is a schematic diagram illustrating an optical segment of an outbound optical fiber line of the system of FIG. 2 according to an embodiment.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise.

The following abbreviations and acronyms may be used in the present document:
- "ASE": amplified spontaneous emission
- "ADC": analog to digital converter
- "AOM": acousto-optic modulator
- "CI": channel interrogator
- "DAC": digital to analog converter
- "DAS": distributed acoustic sensing
- "DOFS": distributed optical fiber sensing
- "EDFA": erbium doped fiber amplifier
- "FWM": four-wave mixing
- "OA": optical amplifier
- "OFA": optical fiber amplifier
- "OFI": optical fiber interrogator
- "OM": optical modulator
- "SOA": semiconductor optical modulator
- "OTDR": optical time domain reflectometer
- "SNR": signal-to-noise ratio
- "OSNR": optical signal-to-noise ratio
- "SPM": self-phase modulation
- "XPM": cross-phase modulation
- "XPolM": cross-polarization modulation

Various embodiments described below relate to an apparatus, and a corresponding method, for distributed optical sensing in an amplified optical fiber line using a set of sensor optical fibers connected therealong. Different sensor optical fibers may be interrogated at different wavelength using wavelength-selective optical loop-back paths. By separating the optical sensing and optical relay functions, more probe light may be launched into the sensor optical fibers while limiting the accumulation of nonlinear distortion of optical probe signals along the amplified optical fiber line.

Various aspects of the apparatus, system, and method described herein may be useful for distributed optical sensing along relatively long optical fiber lines that use multiple optical fiber amplifiers (OFAs), such as rare-earth doped OFAs, e.g., erbium-doped OFAs, and/or Raman amplifiers, to compensate for optical loss in each optical fiber span or segment thereof. The distributed optical fiber sensing operates by transmitting interrogating, or probe, optical signals along the optical fiber line and analyzing back-scattered light, e.g. due to the Raleigh back-scattering on random imperfections in optical fibers or intentionally introduced reflectors. Since light transmitted in long fibers is attenuated to levels that decrease exponentially with the fiber distance, and also because only a small portion of light propagating along an optical fiber typically gets back-scattered at any location in the fiber, extending the reach of a distributed optical sensing along an optical fiber line may require the use of multiple OFAs located therealong.

E.g. the apparatus for extending the range of DOFS described in the European patent application EP4160941 includes a multi-segment out-bound optical fiber line configured for optical sensing therealong, with the back-scattered response optical signal from each span being transmitted back to the apparatus over a return optical fiber line, each of the out-bound and return optical fiber lines including a sequence of OFAs for extending the sensing reach of the system.

The use of OFAs in a multi-span optical fiber system being interrogated may however result in several complications. Some of these complications relate to the time dynamics of the OFAs, e.g. erbium-doped fiber amplifiers (EDFAs), which may respond to changes in the input optical signal by causing spikes and ripples in the amplified transmitted light. Other potential complications relate to the low levels of the Rayleigh scattered response at the input of the return transmission line causing a poor OSNR (optical signal to noise ratio) with the noise typically being the amplified spontaneous emission (ASE) at the receiver side after accumulation of the ASE from many return-path optical amplifiers.

Furthermore, there are limitations related to distortion of optical signals in both the outbound and return optical fiber lines due to optical non-linearities, such as the Kerr non-linearity that causes an optical signal that travels through a fiber to acquire a power dependent optical phase. The non-linear phase shift of the optical signal that is caused by the signal itself is called self-phase modulation (SPM). The phase shift that is caused by optical signals at other frequencies is called cross-phase modulation (XPM). If the other, so-propagating optical signal is not polarized exactly parallel or orthogonal to the affected signal, the polarization of the probe signal will be modulated through so-called cross-polarization modulation (XPolM). The intensity beating between optical probe signals at three optical frequencies (of which two could be identical) will cause mixing products at various fourth frequencies that are sum-difference combination of the three mixing optical frequencies, with the corresponding effect being referred to as the four-wave mixing (FWM). Chromatic dispersion in the optical fiber may moderate the effects of Kerr nonlinearity, especially when the interacting frequencies are far apart. On the other hand, if the peak optical power within a channel becomes high, the interplay between the Kerr-induced modulation and the dispersion may distort the signals severely, with the corresponding distortion referred to as modulation instability (MI).

The accumulation of non-linear distortion of interrogating optical signals may complicate optical sensing along an amplified multi-span optical line, in particular at distances farther away from a source of the interrogating light signal, limiting the sensing reach of the system.

An aspect of the present disclosure provides an apparatus for distributed optical sensing along a multi-span amplified optical fiber line, which may allow overcoming or at least mitigating one or more of the complications related to signal distortions in amplified multi-span optical fiber lines.

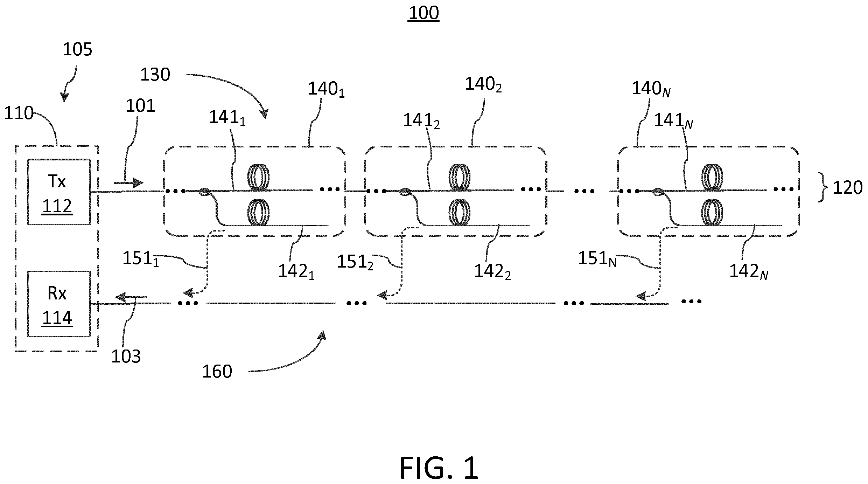

FIG. 1 shows a schematic block diagram of a distributed optical fiber sensing (DOFS) system 100. In some embodiments, the DOFS system 100 may be configured to perform distributed acoustic sensing (DAS) measurements, e.g., as known in the pertinent art. In some embodiments, the DOFS system 100 may additionally or alternatively be configured to perform OTDR measurements and/or interferometric measurements. In some embodiments, the DOFS system 100 may additionally or alternatively be configured to perform other types of DOFS, such as distributed temperature sensing (DTS), distributed strain sensing (DSS), and distributed temperature and strain sensing (DTSS).

The DOFS system 100 illustrated in FIG. 1 includes an optical terminal 105 that connects to an optical fiber line 130. The optical fiber line 130 comprises a sequence of optical segments 140*ₙ*, *n* =1, 2, ..., *N*, which may be generally referred to as optical segments 140. The optical segments 140*ₙ* of the sequence include both a relay optical fiber 141*ₙ* and a sensor optical fiber 142*ₙ*, *n* =1, 2, ..., *N*. First, or input, ends of the relay optical fibers 141*ₙ* and sensor optical fibers 142*ₙ* of a same optical segment 140*ₙ* (except the first one 140₁) are optically connected to a previous one of the optical segments 140, i.e. the 140_{*n*-1}, of the sequence. Second, or output, end of the relay optical fiber 141*ₙ* of the optical segment 140*ₙ* (except the last optical segment 140*_{N}*) is optically connected to a subsequent one of the optical segments 140 of the sequence, i.e. the 140_{*n*+1}.

The optical terminal 105 includes an optical fiber interrogator (OFI) 110, which comprises an optical transmitter (Tx) 112 and an optical receiver (Rx) 114. In some embodiments, the optical terminal 105 may further include one or more sources of load light, as described below. In some embodiments, the optical terminal 105 is absent of load light sources. The optical transmitter 112 is configured to transmit probe light 101 into an input end of the optical fiber line 130 for propagation therealong. The optical receiver 114 of the OFI 110 is connected to receive light 103 returned back to the OFI 110 by back-scattering in the sensor optical fibers 142*ₙ*. The back-scattering may include Raleigh back scattering in the sensor optical fiber and/or back-reflections from, e.g., fiber Bragg gratings (FBGs), discrete broadband reflectors, or UV induced random reflectors (enhanced scattering fiber) that may be incorporated within the sensor optical fibers 142ₙ in some embodiments. The back-scattered light 151₁, 151₂, ..., 151_{N} from respective ones of the sensor optical fibers 142₁, 142₂, ..., 142_{N}, or selected portions of said back-scattered light as described below, may be guided back to the OFI 110 via a return optical fiber (ROF) line 160. The OFI 110 may be configured to process measurements of the return light 103 to obtain sensing information related to conditions of light propagation along the sensor optical fibers 142*ₙ* or in parts thereof, or temporal changes in said conditions. The sensing information may include, but is not limited to, acoustic and/or vibration sensing information, temperature sensing information, pressure sensing information, and the like. The OFI 110 may use various known in the art methods for extracting said sensing information from the return light 103.

The optical fiber line 130 is configured to cause optical amplification of the probe light 101 along and/or between the optical segments 140, so as to compensate for optical loss along a relay optical fiber line 120 comprising the relay optical fibers 141ₙ. The presence of different optical fibers 142ₙ and 141ₙ for optical sensing and for relaying the probe light 101 along the optical fiber line 130 allows selection of the optical power ratio between light propagating into the sensor optical fibers 142 and the relay optical fibers 141. The ability to adjust, e.g. at a system design stage, the optical power injected into the sensor optical fibers 142 relative to the optical power injected into the relay optical fiber 141 provides a degree of control over non-linear signal distortion of the optical probe signals along the optical fiber line 130 while ensuring that the amount of the back-scattered light 151ₙ provides a sufficiently high signal to noise (SNR) ratio at the optical receiver 114.

In some embodiments, the DOFS system 100 may be configured to use different wavelengths of the probe light 101 for sensing along different ones of the sensor optical fibers 142. In some embodiments, the optical transmitter 112 is configured to transmits the probe light 101 over a set of *N* separate wavelength channels C*ₙ* with different center wavelengths λ*ₙ*, *n* = 1, .., *N.* In some embodiments, the number of wavelength channels may be equal to the number of sensor optical fibers 142 along the optical fiber line 130. Each of the channels C*ₙ* has an intrinsic bandwidth *B*_{c} that is defined by a frequency content of the transmitted optical probe signal.

Adjacent ones of the center wavelengths λ*ₙ*, of the sequence may be separated by a wavelength spacing Δλ, so that a corresponding frequency spacing Δν between the channels exceeds the bandwidth *B*_{c} of each channel, typically by at least an order of magnitude. The channel frequency spacing Δν may be, e.g. in a range from 10 GHz to 500GHz, while the bandwidth *B*_{c} of the optical probe signals in each channel may typically be less than 2 GHz, and is typically in a range from 10 MHz to 200 MHz. Accordingly, the back-reflected light of different wavelength channels may be de-multiplexed at the optical receiver 114 for separate measurements along the sensor optical fibers 142.

In a typical embodiment, optical frequencies *νₙ*= c/λₙ corresponding to the center wavelengths λₙ of the wavelength channels C*ₙ* may lie close to frequencies of a uniform, i.e. equally-spaced (periodic), optical frequency grid. The center frequencies *νₙ* may also lie on non-uniform or flexible frequency grids. The channel frequency spacing Δ*ν* between adjacent optical frequencies *νₙ* may somewhat vary from channel to channel to reduce FWM.

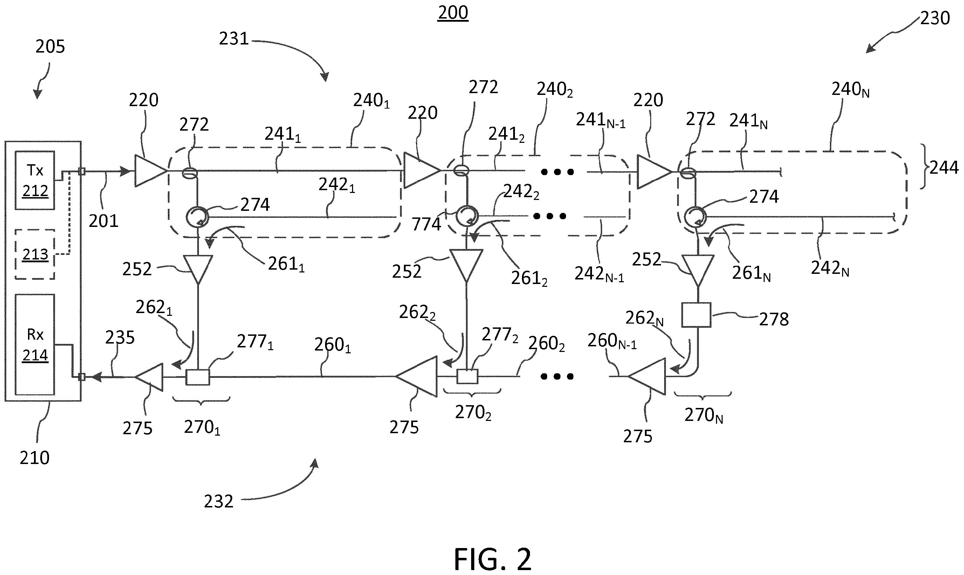

FIG. 2 illustrates an example implementation 200 of the DOSF system 100 of FIG. 1, which is referred to herein as a DOFS system 200 ("System 200"). System 200 includes an optical terminal 205 connected to an optical fiber (OF) system 230. The optical terminal 205 comprises an OFI 210 that includes an optical transmitter (Tx) 212 and an optical receiver (Rx) 214. The OFI 210, the optical transmitter 212, and the optical receiver 214 may be embodiments of the OFI 110, the optical transmitter 112, and the optical receiver 114, respectively, of FIG. 1. The OF system 230 includes an outbound optical fiber line ("OOF line") 231 and a return optical fiber line ("ROF line") 232. The OOF line 231 includes a sequence of *N* optical segments 240ₙ, *n* =1,..., *N* ("optical segments 240"). An input end of the OOF 231 is connected to an output of the OFI 210 to receive probe light 201 generated by the Tx 212 and to propagate said light along the OOF 231. In some embodiments, the OFI 210 may further include one or more load light sources 213 to transmit load light into the OOF line 231 along with the probe light 201, as described below. The ROF line 232 may include a sequence of optical fiber segments 260*ₙ* connected by return-path OAs 275 ("OAs 275") to amplify the back-scattered light on its way to the OFI 210.

In the illustrated example, each of the optical segments 240ₙ (except possibly the last optical segment 240*_{N}*) includes a relay optical fiber 241*ₙ* and a sensor optical fiber 242*ₙ*. The relay optical fibers 241*ₙ* of consecutive ones of the optical segments 240*ₙ*, 204_{*n*+1} are end-connected via optical amplifiers (OAs) 220 to form a relay optical fiber line 244.

The length of one optical segment 240 may be e.g. in a range from about 10 km to about 120 km, or from about 40 km to about 100 km, or as suitable for a particular application. In some embodiments, the length of the relay and sensor optical fibers of a same optical segment 240 may be about the same. In some embodiments, the length of the relay and sensor optical fibers of a same optical segment 240 may differ. The relay and sensor optical fibers of a same optical segment 240 may or may not be located along each other. Some implementations may include one or more optical segments 240, e.g. those that are sufficiently short, where the relay optical fiber 241 of the segment also serves as the sensor optical fiber of the segment.

The sensor optical fibers 242*ₙ* are connected to the ROF line 232 via corresponding optical loop-back (OLB) paths 270*ₙ*. Selected parts 262ₙ of back-scattered light 261ₙ that is reflected or scattered back at various locations along the sensor optical fibers 242*ₙ* are coupled into the ROF line 232 via corresponding ones of the OLB paths 270*ₙ* and are directed back to the OFI 210 as return light 235. The selected parts 262ₙ may be, e.g. back-scattered light of selected wavelength channels as described below.

In the illustrated example, an OLB path 270*ₙ* may include an optical circulator 274, an optional optical preamplifier 252, and an optical add-coupler 277*ₙ*, which may be wavelength-selective. The optical circulator 274 is one embodiment of a device configured to couple probe light 201 in the sensor optical fiber 242*ₙ* and to couple the back-scattered light 261*ₙ* out of the same sensor optical fiber; it may be replaced, e.g., with a directional optical coupler, at a cost of a higher insertion loss.

The OAs 220 are configured to amplify the probe light 201 prior to launching thereof into both the relay optical fiber 241*ₙ* and the sensor optical fiber 242*ₙ* of the optical segment 240*ₙ* via an optical splitter 272. The optical splitters 272 may be located close to outputs of the corresponding OAs, before the output light of the OA is noticeably attenuated by propagating in the optical fiber. The OAs 220 are typically rare-earth doped OF As, e.g. EDFAs. In some implementations, optical amplification along the OOF line 231 may be provided along the relay optical fibers 241*ₙ*, e.g. via the Raman effect (Raman amplifiers). In such implementations, the OAs 220 may represent sections of the relay optical fibers 241*ₙ* with positive net optical gain due to Raman amplification.

The optical splitter 272, e.g. a directional optical coupler, may have an asymmetric optical splitting ratio to direct relatively more light power into the sensor optical fiber 242*ₙ* than the corresponding relay optical fiber 241*ₙ*. In this way, nonlinear distortions of the probe light 201 in the relay optical fiber line 244 may be controlled to an acceptable level, while at the same time sending enough light into the sensor optical fibers 242*ₙ* to obtain therefrom a sufficient amount of back-scattered light 261*ₙ*. The back-scattered light 261ₙ may be due to the Raleigh back-scattering on random fiber non-uniformities, or due to intentionally introduced back-reflectors, such as, e.g., FBGs, discrete broadband reflectors, or UV induced random scatterers (enhanced scattering fiber), which may be incorporated into one or more of the sensor optical fibers 242ₙ. An optimal value of the splitting ratio of the splitter 272 may depend on a particular implementation, e.g. on the length of the relay and sensor optical fibers 241*ₙ*, 242*ₙ*, on the fiber type, etc. Typically, the optical splitter 272 may be configured to couple into the sensor optical fiber 242*ₙ* at least 3 times, or at least 4 times, or preferably at least 5 times more optical power than into the relay optical fiber 241*ₙ*. As an example, the optical splitter 272 has a splitting ratio of 15:85.

The probe light 201 may include a set of *N* spectrally-separate wavelength channels C*ₙ*, at the corresponding center wavelengths λₙ (optical frequencies *νₙ*), *n* =1,..., *N,* e.g. as described above. The center wavelengths *λ*ₙ *n* =1,..., *N* may, or may not be, sequentially ordered in wavelength values. Each, or at least some, of the first (*N*-1) OLB paths 270*ₙ* may be configured to selectively couple into the ROF line 232 only back-scattered light 262*ₙ* of a corresponding one of the wavelength channels Cₙ, so that the Rx 214 receives back-scattered light of different wavelength channels from different ones of the sensor optical fibers. Here, "only" means that all other wavelength channels are attenuated by at least an order of magnitude, preferably five orders of magnitude or more, in power relative to the selected wavelength channel.

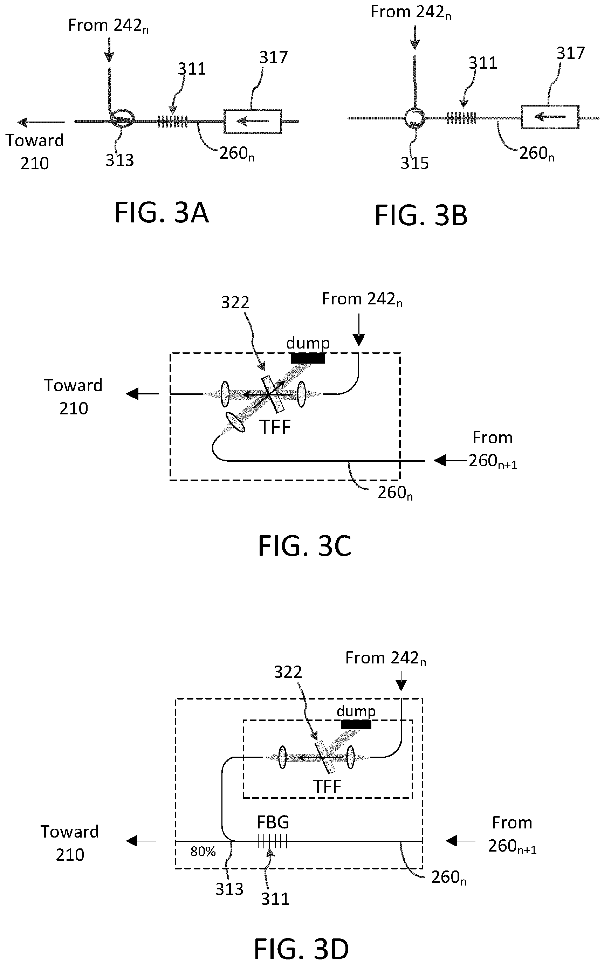

The add-couplers 277*ₙ* may wavelength-multiplex to selectively add the back-scattered light of the corresponding ones of the wavelength channels Cₙ (wavelengths λₙ) to light propagating back toward the OFI 210 along the ROF line 232. In a "through" path, i.e. along the ROF line 232, the add-couplers 277ₙ are configured to block the n-th wavelength channel Cₙ received from upstream, and to pass through light of the remaining (*N*-1) wavelength channels Cₘ at the wavelengths λₘ ≠ λₙ, or at least all of the channels Cₘ ≠ C*ₙ* that are coupled into the ROF line 232 upstream of the add-multiplexer 277*ₙ*. Here, "upstream" means farther from the OFI 210 along the ROF 232. From an output of the add-coupler 277*ₙ*, the cross-coupled light signals 262ₙ, 262ₙ₊₁, ..., 262*_{N}* of the channels C*ₙ*, C_{*n*+1}, ..., C_{N} propagate toward the OFI 210. The add-coupler 227*ₙ* may be embodied, e.g., as described below with reference to FIGs. 3A-3D.

The last OLB path 270*_{N}* may lack an add-coupler 277, with the back-scattered light 261*_{N}* from the last sensor optical fiber 242*_{N}* being coupled into an end of a last segment of the ROF line 232 without filtering. In some implementations, e.g. wherein the OFI 210 is configured to transmit load light into the OOF line 231 in one or more spectrally-separate load channels, the last OLB path 270*_{N}* may include an optical filter 278 configured to selectively attenuate the passed probe channels to increase the relative power of the load light relative to the back-reflected light of the probe channels. In some implementations, the optical filter 278 may be omitted, or may be configured to pass only one, or a subset of, the probe channels C*ₙ* and the load light, e.g. only the probe channel C*_{N}* and the load light therethrough to propagate through the OAs 275 of the ROF line 232.

FIGs. 3A-3D illustrate example wavelength-selective implementations of an add-coupler 277n. In a first implementation shown in FIG. 3A, the add-coupler 277n includes a directional coupler 313 connecting to a fiber Bragg grating (FBG) 311 followed by an optical isolator 317 located in the ROF line 232 upstream of the directional coupler 313. The FBG 311 is configured to selectively reflect light of the *n*-th channel Cₙ (wavelength λₙ) while allowing the remainder of the incident light spectrum to pass therethrough. Thus, the directional coupler 313 and the FBG 311 cooperate to act as a selective add-drop coupler for the n-th wavelength channel Cₙ, selectively substituting light of the n-channel Cₙ received from the sensor optical fiber 242*ₙ* via an OLB path 270*ₙ* for any light of the n-channel Cₙ that may be incident upon the FBG 311 from upstream along the optical fiber segment 260ₙ. In some embodiments the isolator 317 may be omitted, at a potential expense of added noise on the sensing measurements due to sideband reflection from FBG 611 of not-selected channels C*ₘ*, *m≠n* or Rayleigh scattering of same channels upstream in the ROF line 232. Light propagating upstream in ROF line 232 that is not Rayleigh scattered or absorbed by fiber losses is eventually absorbed by an output port of an upstream OA 275, which typically includes an optical isolator. In some implementations, the directional coupler 313 may have an asymmetric coupling ratio, so that more than 50% of light propagating down the ROF line 232 is passed through the directional coupler 313 toward the OFI 210. By way of example, a 80/20 directional coupler may be used. Such an asymmetric coupling ratio of the directional coupler 313 may reduce the transmission loss in the ROF line 232, at the expense of a somewhat higher gain of the optical preamplifier 252 in the OLB path 270n. In this way the output power of the return-path OAs 260 can be reduced compared to an embodiment with a symmetric 50:50 directional coupler 313, thus reducing the nonlinear distortion in the ROF line 232. FIG. 3B illustrates an embodiment where the directional coupler 313 is replaced by a circulator 315.

The FBG 311 may have extra transmission loss outside of the reflection bandwidth thereof, due to coupling to cladding modes. This can to some degree be mitigated in implementations where the channel frequency νₙ increases with increasing channel number *n* (i.e. with distance of the corresponding sensor optical fiber 242ₙ from the OFI 210), since cladding losses typically occur at frequencies below the FBG center frequency.

FIG. 3C illustrates an implementation of the add-coupler 277n, in which the FBG 311 is replaced with a thin-film filter (TFF) 322 having a passband that is smaller than the interrogation channel spacing Δν and is centered at the wavelength λₙ of the channel being added to the return path. The TFF 322 is configured to multiplex light of the wavelength channel Cₙ received from the corresponding sensor optical fiber 242*ₙ*, with light of the wavelength channels C*ₘ, m*>*n* (wavelength λₙ₊₁, _{...,} λ_{N}) received along the ROF line 232, and to pass the multiplexed light towards the OFI 210. An advantage of this configuration compared to that of FIG. 3A is a potentially reduced insertion loss. A potential disadvantage is a possibly poorer extinction, i.e. the suppression of the dropped wavelengths relative to the transmitted, which may lead to a crosstalk between signals from different sensor optical fibers 242*ₙ*.

FIG. 3D illustrates an implementation of an add-coupler 277n combining the FBG 311 with the TFF 322. This implementation may be useful if the FBG 311 has poor sidelobe suppression in reflection. The TFF 322 may help to improve the extinction of not-selected channels Cₘ, *m≠n,* in the optical loopback path 270ₙ.

In some embodiments, the optical transmitter 212 of the OFI 210 may be configured to transmit the optical probe signals of the probe light 201 at a temporal series of start times, such that a center wavelengths of those of the optical probe signals that are transmitted at consecutive ones of the start times are different. The optical probe signals are typically configured to facilitate extracting desired sensing information from the back-scattered light, e.g. via methods known in the pertinent art.

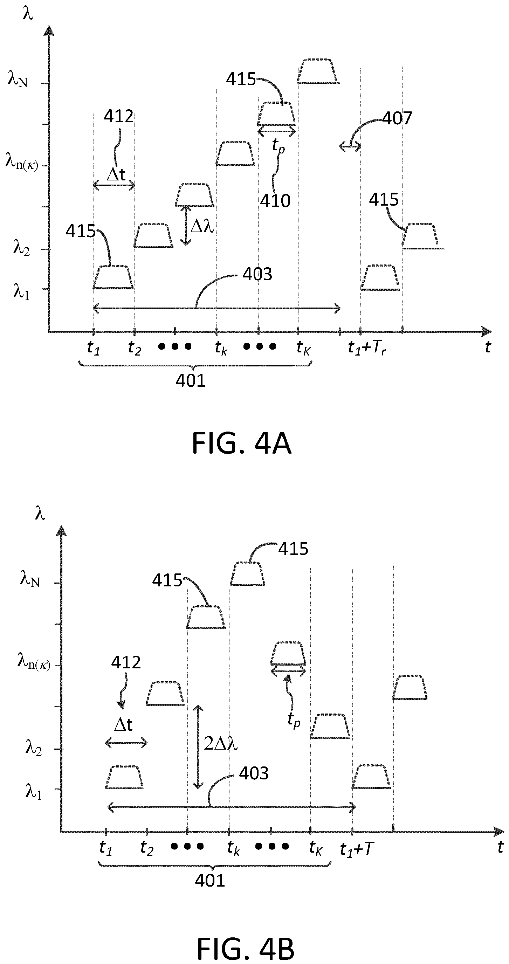

Referring to FIGs. 4A and 4B, in some embodiments an optical transmitter of an OFI, such as e.g. the transmitter 112 or the transmitter 212 of the OFI 210, is configured to transmit, within a transmission period *T* 403, *K* optical probe signals at a temporal series 401 of *K* corresponding (signal transmission) start times *t*₁, *t*₂*,* ..., *tₖ,* ... *t_{K}* ("start times *tₖ*"), so that different ones of the optical probe signals within the transmission period *T* are transmitted in different wavelength channels having different center wavelengths λₖ, e.g. different ones of the wavelength channels C*ₙ*. In FIGs. 4A and 4B, the optical probe signals are indicated at 415 ("probe signals 415"), and shown schematically with dotted lines as optical pulses. Vertical offsets between different probe signals 415 in the figures represent wavelength offsets between the center wavelengths thereof ("channel spacing"). In various embodiments, each of the probe signals 415 may be a single optical pulse or a sequence of optical pulses, together spanning a frequency band of a spectral width *B_{c}.* In a typical embodiment the spectral width *B_{c}* is much smaller, at least by a factor of 10, than the frequency spacing Δν between adjacent ones of the wavelength channels.

The optical transmitter, e.g. 112 or 212, thus transmits, over a transmission period *T* 403, *K* optical probe signals 415 at *K* different center wavelengths λₖ of the corresponding *K* different wavelength channels C*ₙ*. Here *T*=*K·*Δ*t,* where Δ*t* is the time delay between consecutive start times. The transmission sequence may be repeated with a repeat period *T*ᵣ ("sampling period") that is equal or greater than the transmission period *T* of the pulse sequence, *Tᵣ* ≥ *T.* In the illustrated example, the duration 410 *tₚ* of one optical probe signal 415 transmission is smaller than the delay time Δ*t*, so that the optical probe signals 415 of different wavelength channels transmitted at consecutive start times, e.g. *tₖ* and *t*_{*k*+1}*,* do not overlap. In some embodiments, the transmission duration 410 *tₚ* of one optical probe signal 415 may somewhat exceed the delay time Δ*t*, so that the optical probe signals 415 of different wavelength channels transmitted at consecutive start times *tₖ* overlap in time at the edges. In some embodiments, there may be an idle time Δ*T* = (*Tᵣ* - *T*) 407 between two consecutive transmission periods 403 when no probe light is being transmitted (FIG. 4A); in the example of FIG. 4A, the repeat period *Tᵣ* = (*T* +Δ*T*).

In the example illustrated in FIGs. 4A and 4B, the number of different signal start times *tₖ* within the transmission period *T* 403 is six, i.e. *K* = 6, but may typically vary from 2 to 50. Typically, the number *K* of the optical probe signals 415 transmitted over one transmission period *T* 403, and thus the number of spectrally separate wavelength channels in which the optical probe signals are transmitted, is equal to the number *N* of different optical fibers to be interrogated with the corresponding ones of the optical probe signals 415. In some embodiments, *K<N.*

For example, the *N* sensor optical fibers 242ₙ of the optical system 230 may be interrogated by cycling through the *N* wavelength channels Cₙ, transmitting the optical probe signal 415 of each channel at a different one of the transmission start times *tₖ.* The optical transmitter 212 may repeatedly cycle through the *N* wavelength channels C*ₙ* with the repeat period *Tᵣ* equal or greater than the transmission period 403 *T*.

FIGs. 4A and 4B illustrate example implementations for separately interrogating six different optical fibers, e.g. six different optical fiber segments 140 (FIG. 1) or six different sensor optical fibers 242*ₙ*, by cycling through *N* = 6 wavelength channels over each transmission period *T* 403. In the example of FIG. 4A, the center wavelength of the optical probe signals 415 increases step-wise in time at each transition to a subsequent probe signal 415 over the duration of the transmission period 403. In a variation of this example, the center wavelength decreases step-wise over the duration of the transmission period 403. Such transmission scheme results in a relatively large wavelength shift of about (*N*-1)·Δλ at a juncture of consecutive transmission periods 403. An abrupt large wavelengths shift of probe light may cause undesired transient response of the OAs of the optical fiber line being interrogated, e.g. the OAs 220 of the OOF line 321 of FIG. 2. It may therefore be preferable to limit abrupt wavelength shifts of the probe light to values that are much smaller than the OA gain bandwidth, e,g. less than ¼ thereof. Here, "abrupt" refers to changes that happen on a time scale comparable or faster than a gain relaxation time in the downstream OAs. The gain relaxation time for an EDFA may typically be in 5 - 10 µs.

In the example of FIG. 4B, the center wavelength of the optical probe signals 415 first increases, e.g. over approximately one half of the transmission period 403, and then decreases, e.g. over the other half of the transmission period 403. In a variation of this example, the center wavelength first decreases, and then increases over the duration of the transmission period 403. Such a scheme has a potential advantage of limiting abrupt wavelength shifts of the probe light both within and between the transmission periods 403 to, e.g. about 2Δλ. A similar scheme that may also provide sufficient advantage by limiting abrupt wavelength shifts is one where the center wavelength of the transmission increases over ¼ of the transmission period then decreases over another ¼ of the same transmission period, then increases over another ¼ of the same transmission period, and finally increases over the last ¼ of the same transmission period. In another example, the center wavelength of the transmission increases by stepping up through the "even" wavelength channels with the central wavelengths λ₂ₖ , *k*=1, 2, ..., over about half of the transmission period T 403, and then the center wavelength of the transmission decreases by stepping down through the "odd" wavelength channels with the central wavelengths λ₂ₖ₊₁ *k*=1*,* 2, ..., over the other half of the transmission period T 403. Both embodiments, with small wavelength changes between steps, are expected to result in a more stable operation of the downstream OAs, e.g. the OAs 220 of the OOF line 231.

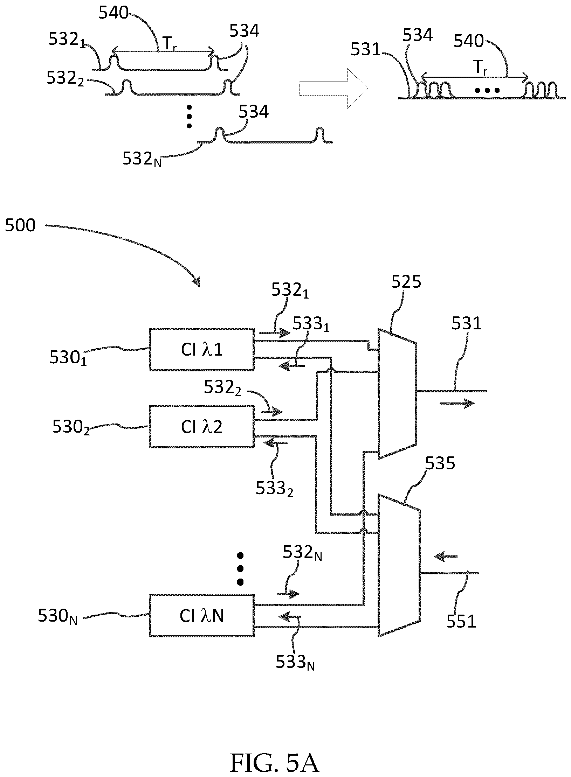

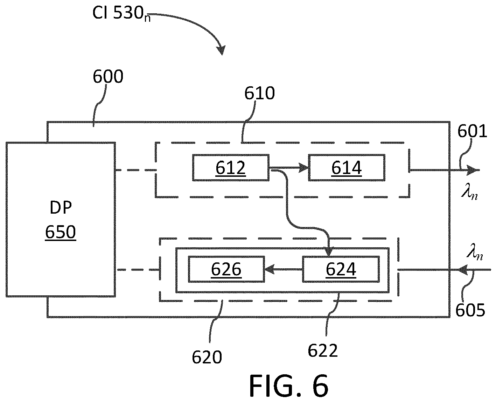

FIG. 5 illustrates an example implementation 500 of the OFI 210 of FIG. 2 ("OFI 500"). The OFI 500 is a multi-channel device including a plurality of *N* ≥ 2 channel interrogators (CIs) 530₁, ..., 530*_{N}*, generally referred to herein as CIs 530. Each of the CIs 530 includes an optical transmitter (e.g. 610, FIG. 6) and an optical receiver (e.g. 620, FIG. 6). Optical outputs of the CIs 530 connect to an optical wavelength multiplexer (MUX) 525, while optical inputs of the CIs 530 connect to an optical wavelength demultiplexer (DMUX) 535, as indicated in FIG. 5. The optical transmitters of the *N* CIs 530, together with the MUX 525, embody the optical transmitter 212 of the OFI 210 or the optical transmitter 112 of the OFI 110. The optical receivers of the *N* CIs 530, together with the DMLTX 535, embody the optical receiver 214 of the OFI 210 or the optical receiver 114 of the OFI 110.

The CIs 530*ₙ*, *n* = 1,..., *N,* are configured to operate at corresponding ones of the center wavelengths λ*ₙ*, so that each of the CIs 530n is responsible for interrogating a corresponding one the sensor optical fibers 242*ₙ*. In an example embodiment, each of the CIs 530*ₙ* is configured to perform DOFS, e.g., DAS, measurements as known in the pertinent art, using optical probe signals 532*ₙ* of a corresponding wavelength channel C*ₙ*. The optical probe signals 532*ₙ* generated by the CIs 530*ₙ*, *n* =1,..., *N,* are then wavelength-multiplexed by the MUX 525 to obtain probe light 531. The probe light 531 may be an example of the probe light 201 in some embodiments.

Referring to a top of FIG. 5, in some embodiments, the optical probe signals 532*ₙ*, which are generated by the corresponding CIs 530*ₙ* at corresponding ones of the channel center wavelengths λ₁, ..., λ_{N}, comprise each a sequence of suitably configured optical pulses 534 with a same repeat period *Tᵣ* 540. The CIs 530*ₙ* may time-synchronize to transmit different ones of the optical probe signals 532*ₙ* in a time interleaved fashion, so that the output probe light 531 includes a sequence of *N* optical probe pulses of different center wavelengths within the repeat period *Tᵣ* 540.

In some embodiments, the optical probe signals 532ₙ are time-multiplexed so that each CI 530ₙ transmits an optical pulse 534 at a corresponding one of the start times *tₖ,* (see e.g. FIGs. 4A, 4B), in a specified order.

The optical probe signals 532*ₙ* of the different wavelengths λ*ₙ*, *n* = 1 ... *N* cause an optical system being interrogated, e.g. the optical system 230 of FIG. 2, to return corresponding optical response signals 533ₙ of the same wavelengths, which are received at an optical input of the OFI 500 with a return optical signal 551. The return optical signal 551 may be an example of the return optical signal 235 of FIG. 2. The optical response signals 533ₙ are wavelength-demultiplexed by the DMUX 535 and provided to the corresponding ones of the CIs 530₁ - 530*_{N}*. The optical response signals 533ₙ may comprise, e.g., the back-scattered light 262ₙ of corresponding wavelength channels Cₙ received from respective ones of the sensor optical fiber 242ₙ. The CIs 530₁ - 530*_{N}* then operate to measure and process the respective back-scattered light 262ₙ, e.g., using methods known in the pertinent art, to obtain therefrom, e.g., acoustic and/or vibrational sensing information along a corresponding sensor optical fiber 242ₙ.

FIG. 6 shows a schematic block diagram of an example embodiment 600 of a channel interrogator 530*ₙ* ("CI 600"). The CI 600 includes an optical transmitter 610 configured to transmit an optical probe signal 601 at a central wavelength λ*ₙ*. The optical probe signal 601 may include a sequence of probe optical pulses to interrogate a length of an optical fiber. The CI 600 further includes an optical receiver 620 configured to receive parts of the pulses returned by the system being interrogated and to perform measurements thereon, e.g. for use for DAS measurements. Results of the measurements are provided to a digital processor 650 to obtain optical fiber sensing information therefrom, e.g. using techniques known in a pertinent art. The processor 650 may also be used to control the optical transmitter 610 of the CI 600. In a system comprising a plurality of the CIs 600 operating at different center wavelengths λ*ₙ*, *n* = 1,..., *N,* such as e.g. the OFI 110 or the OFI 210, the processor 650 may be shared with some or all of the CIs used in the system.

In an example embodiment, the optical transmitter 610 comprises a laser 612 that is followed by an optical modulator (OM) 614 and an optional optical amplifier (not explicitly shown). The optical modulator 614, e.g. an acoustic optical modulator (AOM), is controlled by the digital processor 650 via a suitable driver (not explicitly shown) to apply a desired modulation signal to the laser light to generate a sequence of optical probe pulses. In some embodiments the optical probe signal 601 at the output of the OM 614 is a sequence of optical probe pulses that are about 5µs to 50 µs long. The pulses may be frequency-modulated ("frequency-chirped"), which enables signal compression at the receiver as known in the art. E.g., the processor may 650 may operate the OM 614 to monotonically shift ("sweep") the output light in frequency over the duration of each pulse in accordance with a complex modulation function *h*(*t*)*.* By way of example, the amount of frequency shift may be, e.g. in a range from 5 to 200 MHz over a duration of each pulse. In some embodiments, the pulses may be linearly frequency modulated, i.e. with the chirp rate d*ν*/d*t* constant over the pulse duration; here *ν* = (d*φ*/d*t*)/2π is the instantaneous optical frequency, *φ* denoting the optical phase and *t* denoting the time. In some embodiments, the probe pulses may be suitably apodized, i.e. with desired durations of the rising and falling edges thereof. In some embodiments, e.g. wherein probe pulses transmitted in different wavelength channels overlap at the edges, the duration of each of the rising and falling edges of each pulse may be less than 2µsec, or preferably about or less than 0.2 µsec. In some embodiments, the chirp rate may vary over the duration of a pulse; e.g. the chirp rate at the pulse edges may be greater than in a middle portion of the pulse; e.g. the chirp rate may gradually decrease toward the center of the pulse. Non-linearly varying ("sweeping') the optical frequency in this manner may contribute to suppressing compressed-signal side-lobes at the receiver. Techniques for generating frequency-chirped pulses using optical modulators, such as e.g. AOM or interferometer-based, are well known in the art. The optical probe signals 601 from an output of the optical transmitter 610 may be sent to a MUX, such as e.g. the MUX 525 of the OFI 500, to be wavelength-multiplexed with corresponding outputs of other instances of the CI 600 centered at a different wavelength, e.g. as described above with reference to FIG. 5. In some embodiments, the processor 650 may coordinate the operation of the optical modulator 614 with optical modulators of other co-located CIs operating at different wavelengths to time-multiplex the output optical pulses thereof.

The optical receiver 620 may include an opto-electric (OE) converter 622 followed by an analog-to-digital converter (ADC) (not explicitly shown) that connects to the processor 650. The optical receiver 620 may be a coherent optical receiver adapted to make phase-sensitive measurements of the received light, with the processor 650 configured to extract relevant optical phase and/or amplitude information from the measurements. The OE converter 622 may include an optical mixer 624, such as e.g. a dual-polarization 90° optical hybrid, to coherently mix the received light with local oscillator light sourced from an output of the laser 612, e.g. separately in two orthogonal polarizations, as known in the art. The output(s) of the optical mixer 624 connect to a photodetector circuit 626, which includes one or more photodetectors, e.g. one or more photodiode pairs connected for balanced detecting (not explicitly shown), typically followed by one or more trans-impedance amplifiers ("TIAs", not explicitly shown). Electrical signals generated by the photodetector circuit 626 are converted into one or more streams of digital samples and processed in the processor 650 using a suitable signal-processing algorithm to obtain, e.g., acoustic or other sensing data along the corresponding one of the sensor optical fibers of a system being tested, e.g. the sensor optical fibers 242n of the optical system 230 of FIG. 2. In various embodiments, such sensing data may be used to detect the presence of mechanical vibrations, fiber faults, localized strain, localized temperature excursions, etc, and/or the location of such events along the optical fiber line.

In some embodiments, e.g. wherein the optical probe signal 601 generated by the transmitter 610 includes frequency-chirped optical pulses, the digital processor 650 may be configured to process the received streams of digital samples using a matched-filter technique. E.g. the processor 650 may be configured to obtain a down-converted complex digital representation of the optical filed of the received back-scattered light, and compute a convolution of said digital representation with a matched-filter impulse response to obtain a back-scattering response of a corresponding sensor fiber. The matched-filter impulse response, *h**(-*t*), is a complex conjugate of the complex modulation *h*(*t*) applied to the transmitted optical probe signal. E.g. the processor 650 may be configured to use the well-known "overlap-save" FFT-based convolution algorithm to perform the matched-filter digital signal processing. Techniques to transmit frequency-chirped pulses and to process back scattered signals using filters matched to the transmitted pulses are known in the art.

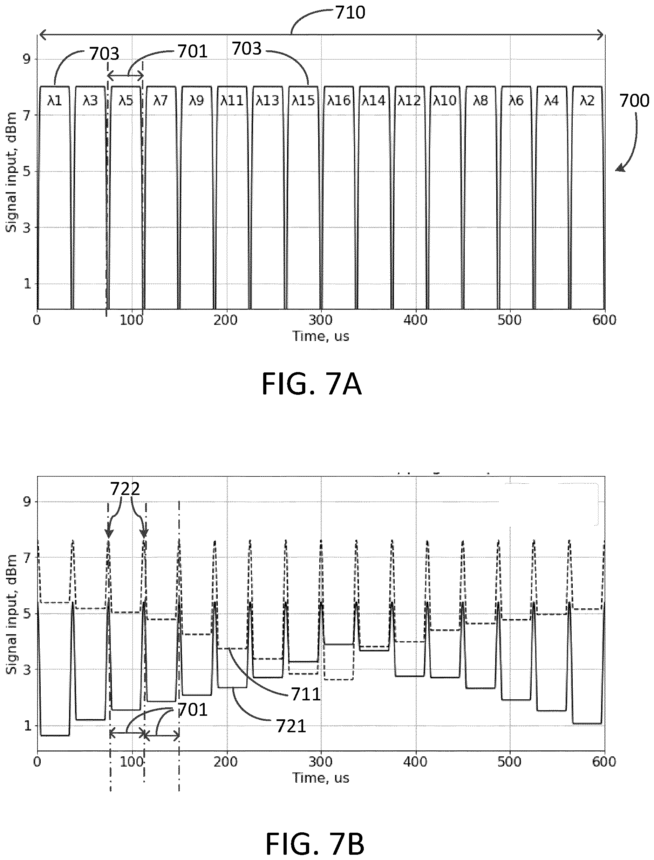

FIG. 7A illustrates an example pulse sequence 700 of a probe light that may be generated by optical transmitters of an OFI, such as e.g. OFIs 110, 210, or 500, for interrogating an optical system with sixteen sensor optical fibers, such as e.g. the OOF line 130 of FIG. 1 or the OF system 230 of FIG. 2 with *N* = 16. In this example, the pulse sequence 700 is transmitted over a transmission period *T* 710 that includes a temporal sequence of 16 time slots 701. Each consecutive pulse 703 has a different center wavelength λₙ than the preceding pulse, and is transmitted at a different start time *tₖ,* e.g. by optical transmitters 610 of the corresponding CIs 530*ₙ*, *n* =1, ..., 16 (FIGs. 5 and 6). The probe light, e.g. 531, may include a periodic repetition of the pulse sequence 700. The optical transmitter(s) repeatedly cycle through the *N*=16 different wavelengths λ*ₙ*, *n* =1, ..., 16, transmitting in each cycle (each transmission period 710) *N*=16 optical pulses 703, each optical pulse 703 at a different center wavelength λₙ, e.g. as indicated in FIG. 7A for each pulse 703.

In the illustrated example, the consecutive optical pulses 703 do not overlap, which eliminates or at least reduces nonlinear distortion of the pulses due to the four-wave mixing (FWM) in the optical fiber line being interrogated. Accordingly, both the wavelength and the optical power of the probe light varies in time, with the transmission wavelength abruptly changing and the optical power dropping at transitions between the time slots 701 (consecutive ones of the pulses 703).

When the pulse sequence 700 propagates in an amplified optical line, e.g. the OOF line 231 of FIG. 2, the optical amplifiers thereof (e.g. the OAs 220) may react to the change in the input optical power and/or wavelength by varying the amplifier gain, causing undesired transients, e.g. spikes and/or ripples, in the probe optical pulses at the amplifier output(s). These transients may grow in amplitude as the probe pulses propagate through a series of optical amplifiers, e.g. the OAs 220 of FIG. 2. In some embodiments, load light from a load light source, e.g. 213, may be used to "fill in" the dips in the optical power between the probe pulses 703, e.g. as illustrated in FIG. 7B at 722. However, having one load light channel may not be sufficient in embodiments with large changes in the wavelength of transmission.

In the example illustrated in FIG. 7A, the center wavelength of the pulses 703 first increases, and then decreases over the duration of the transmission period 710 (~ 600 microseconds (µs) in this example); this limits the maximum wavelength shift at timeslot transitions. However, the overall wavelength variation of the probe light across the pulse sequence 700 may still have a significant effect on the OA gain spectrum.

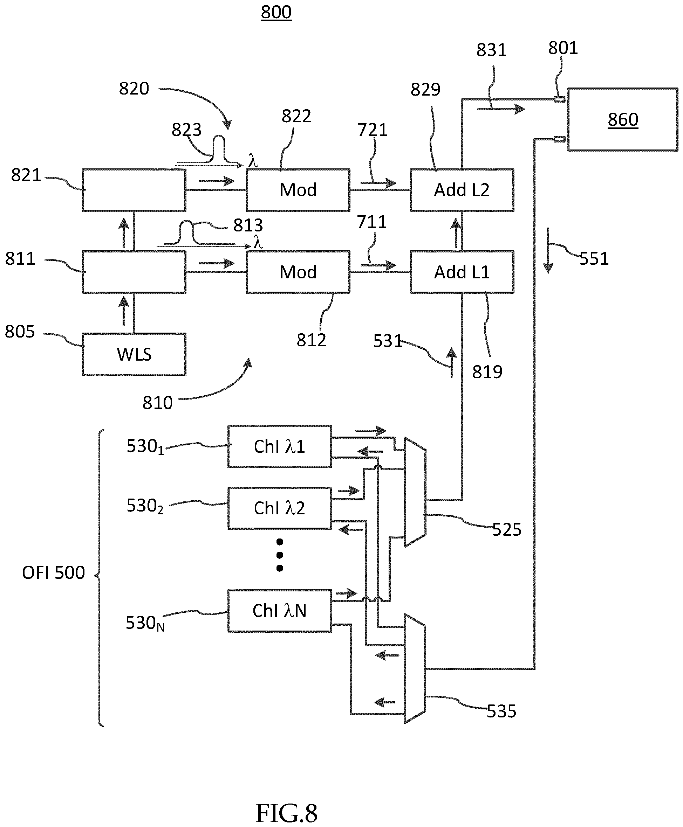

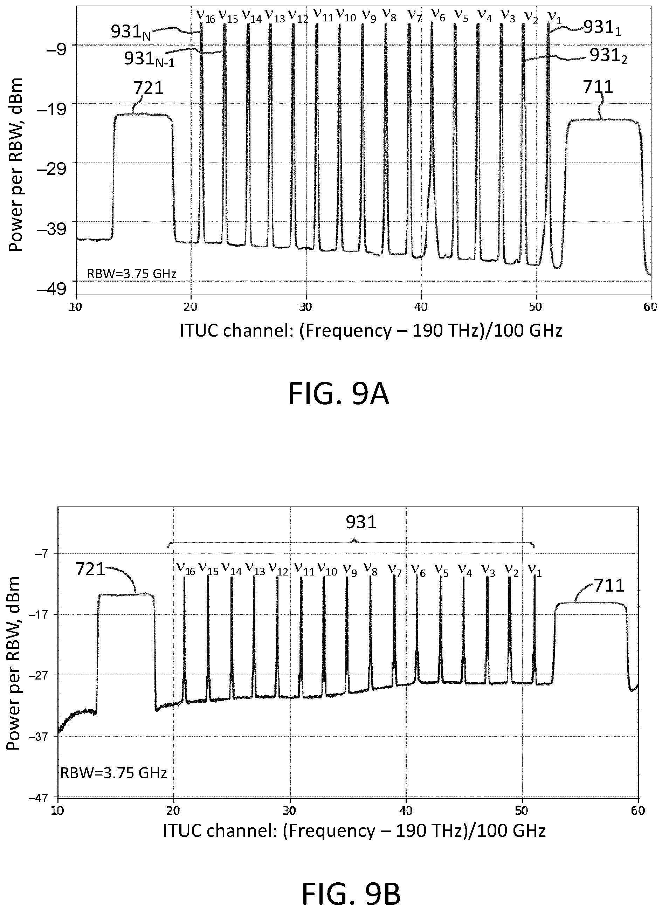

Some embodiments may therefore use multiple channels of temporally varying load light in addition to the probe light to stabilize the gain of optical amplifiers in an optical fiber line being interrogated. FIG. 7B illustrates, for an example embodiment described below with reference to FIG. 8 and/or FIGs. 9A and 9B, the co-modulation of load light in load light channels 711 and 721 synchronized to the pulse sequence 700 of FIG. 7A. The load light channels 711 and 721 are spectrally located at opposite sides of the entire spectrum of probe channels 931, as illustrated in FIGs. 9A and 9B.

FIG. 8 illustrates an example apparatus 800 configured to output the probe light 531 in parallel with two channels of load light, 721 and 711. The apparatus 800 may be an example of the optical terminal 105 of FIG. 1 or the optical terminal 205 of FIG. 2 according to some embodiments. The apparatus 800 includes, in addition to the OFI 500 described above, two sources of temporally-varying load light, a first load light source 810 and a second load light source 820. In the shown example, these sources are implemented using a common white-light source 805, followed by respective passband filters, 811 and 821, and optical modulators (OM), 812 and 822. The first passband filter 811 is configured to extract light of a first wavelength range 813; the extracted wavelengths are directed to a first OM 812, which outputs temporally varying load light of a first load channel 711. The rest of the white light is passed to the second passband filter 821, which is configured to extract therefrom light of a second wavelength range 823. The second extracted wavelengths are passed to a second OM 822, which outputs temporally varying load light of the second load channel 721. Each of the first and second OMs 812, 822 may be implemented, e.g., as a semiconductor optical amplifier (SOA), conveniently combining optical modulation and amplification functions; other suitable optical modulators, such as but not limited to, e.g., acousto-optic modulators (AOMs), may also be used. Alternative implementations of the load light sources 820, 810 are possible, as will be apparent to those skilled in the art.

The probe light 531 from the OFI 500, the load light of the first load light channel 711, and the load light of the second load light channel 721 are directed to a same optical output 801, e.g. using add couplers 819 and 829, to form the output light 831 of the apparatus 800. Each of the add couplers 829, 819 may be implemented with suitable wavelength multiplexers. The output light 831 may be used in place of the probe light 201 in some embodiments of the DOFS system 200.

The load channels 711, 721 are spectrally separate from the probe light 531 to allow for wavelength multiplexing and de-multiplexing of the probe and load light. In the illustrated embodiment, the wavelength ranges 813, 823 of the load light are located at opposite sides of a wavelength range of the probe light 531, e.g. as illustrated in FIG. 9A where the probe channels 931 exemplify the probe light 531.

In some embodiments, the wavelength ranges 813, 823 of the load channels 711, 721 are each wider than the bandwidth of the probe light 531 at each center wavelength. In some embodiments, preferably at least as large as the frequency spacing Δv between adjacent wavelength channels Cₙ of the probe light 531. In other embodiments, the load channels 711 and 721 may be relatively narrow-band. In some embodiments, only one load light source may be used.

FIGs. 9A and 9B schematically illustrate example time-averaged spectra of the output light 831 of the apparatus 800 that is configured to interrogate a sixteen-segment implementation of the OOF line 231 of the optical system 230 of FIG. 2, i.e. with *N* = 16 sensor optical fibers 242*ₙ*. The spectrum shown in FIG. 9A exemplifies a typical time-averaged spectrum of the interrogation light at an input to one of the relay optical fibers 241*ₙ* in the relay optical fiber line 244. FIG. 9B shows a time-averaged spectrum at the input to one of optical fiber segments 260*ₙ* of the ROF line 323, i.e. the output one of the OAs 275 in the ROF line 232, for an example configuration of the OLB path 270*_{N}* described below.

Spectral lines 931₁, 931₂, ..., 931*_{N}*represent the time averaged spectrum of the probe pulse sequence 700 of FIG. 7A, and correspond to the sixteen wavelength channels Cₙ of the probe light, with the respective central frequencies ν₁, ν₂, ... , ν₁₆ (central wavelengths λ₁, λ₂, ... , λ₁₆ in FIG. 7A, λₙ=*c*/ν*ₙ*). In this example, the wavelength channels of the probe light are approximately aligned with the C-band ITU frequency grid, and are spaced by approximately 200GHz. The frequency spacing of the probe channels Cₙ may be somewhat uneven to reduce four-wave mixing. Load light in a first load channel 711 includes wavelengths that are smaller than any of the center wavelengths λ*ₙ*=c/ν*ₙ* of the optical probe light. Load light in a second load channel 721 includes wavelengths that are greater than any of the wavelengths of the probe optical channels 931₁, 931₂, ..., 931_{N}. In some embodiments, e.g. where the load light experiences random back-scattering in the sensor optical fibers and is transmitted over the ROF line 232, the spectral width of each load channel 711 and 721 preferably exceeds the spacing Δλ between adjacent ones of the central wavelengths λₙ of the probe channels 931. In the illustrated embodiment, the spectral width of each load light channel 711, 721 exceeds 2Δλ.

In some embodiments, one of the load channels 711 and 721, e.g. the short-wavelength load channel 711, is located around a wavelength corresponding to a maximum gain of the active optical fiber of the downstream OF As within an operating bandwidth of the OF As (e.g. OAs 220 in FIG. 2). The other of the load channels 711 and 721, e.g. the long-wavelength load channel 721, may be centered at a wavelength corresponding to a minimum gain of the rare-earth doped optical fiber of the downstream OF As within the same operating bandwidth. This may correspond to centering the load light channels 711, 721 approximately at the maximum loss and the minimum loss of the GFF used in the OF As. The active optical fiber may be e.g. a rare-earth doped optical fiber of the OF A, typically the erbium-doped fiber (EDF). The operating bandwidth is a spectral bandwidth that comprises all channels of the probe light and the load light channels.

Referring now back to FIG. 7B, the figure shows temporal variations of the load light power in the short-wavelength load channel 711 ("Load 1", solid line) and in the long-wavelength load channel 721 ("Load 2", dashed line). The load light of the load channels 711, 721 is injected into an optical fiber line, e.g. the OOF line 231 of FIG. 2, together with the probe optical pulse sequence 700 to stabilize the gain of downstream optical amplifiers, e.g. OAs 220 (FIG. 2). The optical power in the load light channels varies in time in synchronization with the pulse sequence 700 in FIG. 7A, to counteract the effect of probe light power and wavelength variations during the pulse sequence 700 in FIG. 7A on downstream optical amplifiers of the outbound optical fiber line, e.g. the OAs 220. The horizontal (time) axes in FIGs. 7A and 7B are aligned to illustrate temporal variations happening synchronously in the probe channels (FIG. 7A) and the load channels (FIG. 7B).

The optical power of both the first (711) and second (721) load light channels briefly rises in-between consecutive probe pulses 703, so as to at least partially compensate the effect of a drop in the power of the probe light on the gain of the downstream optical amplifiers, e.g. the OAs 220 in FIG. 2. In FIG. 7B, this is manifested by load light peaking 722 in-between the probe pulses 703, when the total optical power of the probe light drops. In some embodiments the peaking 722 of the load light at slot junctions may be absent, e.g. if consecutive probe pulses overlap at the edges so that the drops in the optical power of the probe light at slot junctions are absent or small.

Furthermore, the optical powers of the two load channels 711 and 721 change in opposite directions after a change in the center wavelength λₙ of probe light transmission, e.g. after the peaking (if present) at slot junctions in a middle portion of a subsequent pulse 703; changing the optical powers of the two load channels 711 and 721 in opposite directions responsive to a (step-wise) change in the transmission wavelength λₙ may at least partially counteract the effect of changing the center wavelength λₙ of the probe light upon the gain spectrum G(λ) of the downstream OAs. In the example illustrated in FIGs. 7A and 7B, during a first half of the transmission period 710 of the pulse sequence 700, when the center wavelength of the probe light increases from time slot to time slot, the "mid-pulse" optical power in the first load channel 711 (the short-wavelength side of the spectrum) increases, while the "mid-pulse" light power in the second load channel 721 (the long-wavelength side of the spectrum) decreases. During the second half of the transmission period 710 of the pulse sequence 700, as the wavelength of the probe light decreases, the "mid-pulse" power of the first load channel 711 decreases, while the "mid-pulse" power of the second load channel 721 increases.

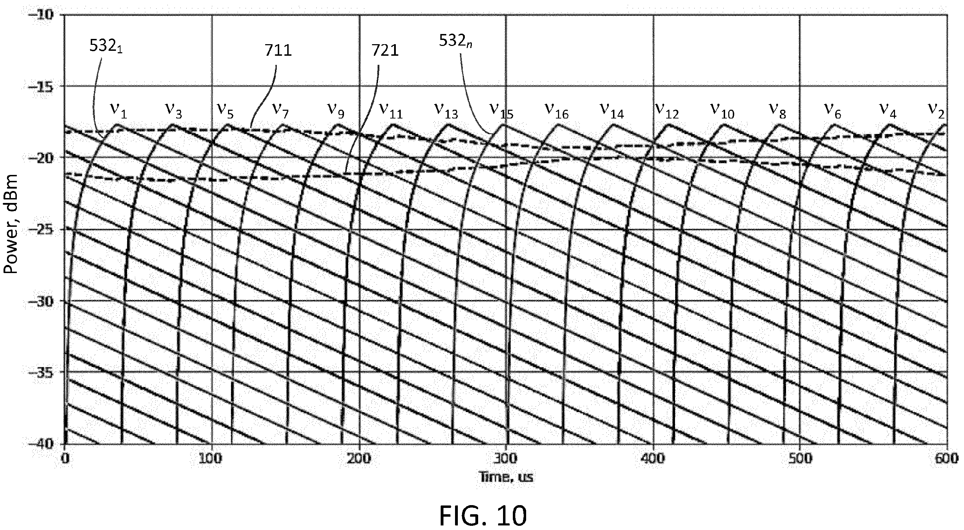

FIG. 10 shows, for the example described above with reference to FIG. 7A, a typical time dependence of optical power of the back-scattered light, e.g. 262*ₙ* or 533*ₙ*, that is expected to be returned back to, e.g., the OFI 210 or OFI 500, in different probe channels Cₙ (spectral lines 931 in FIGs. 9A, 9B) due to the Raleigh back-scattering of pulses 703 in the sensor optical fibers, e.g. 242ₙ (FIG. 2). The Raleigh scattering is a random process, and the power of the scattered light will generally fluctuate, e.g. around the values plotted for the illustrated example. FIG. 10 shows expectation values (mean values) of the optical power of the return light in each probe channel Cₙ (spectral lines 931 in FIGs. 9A. 9B); actual signal power of the back-scattered light may fluctuate with a standard deviation that is comparable to the mean value (typically about one half thereof), and with a bandwidth equal to the optical bandwidth of the optical probe signal in the channel. These fluctuations may add some undesired SPM-induced phase noise into the return light 235.

In order to keep the SPM-induced phase noise in the ROF line 232 to an acceptable level, the peak expectation value of the optical power of the back-scattered light in each channel Cₙ, of the probe light at the output of a typical return-path OA 275 should preferably be limited, e.g. to about 0.3 mW or less in some typical embodiments. By way of example, for a 60 km long sensor optical fiber and a 600 µs sampling period, this corresponds to a time averaged power per probe wavelength channel Cₙ less than about -12 dBm, or less than about 0 dBm summed over all 16 probe light channels 931 in this example.

Typically, an EDFA operating with an output power of less than 0 dBm will operate in an unsaturated regime where the gain has little dependence on the input optical power. This may be the case, e.g., when the pump power is relatively high, which may be desirable in order to achieve a low noise figure operation. It may be advantageous to operate the return-path OAs 275 in the saturated regime, since this will tend to stabilize the optical power of the return light as it propagates through the OAs. In some implementations, operation of the return-path OAs 275 in the saturated regime may be achieved, e.g., by increasing the light power in the load channels 711, 721.

Referring now back to FIGs. 9A and 9B, in some implementations the OF system 230 of FIG. 2 may be configured to have a higher ratio between the optical power of the load and probe light in the ROF line 232 than in the OOF line 231. E.g., in the illustrated example, the mean power of each probe channel 931 at the output from the first OA 275 of the ROF line 232 (FIG. 9B) is about -11.2 dBm, as suggested above, while the load channels 711, 721 carry about 7 dBm each. At the output of the last add-coupler 277 in the OOF line 231 (the relay line output, which may be terminated and not in use), the mean power of each probe channel is greater, i.e. about -5.1 dBm, while the load channels 711, 721 are lower in power, about 0.5 dBm each (FIG. 9A). Here, "first OA of the ROF line 232", and "last coupler in the OOF line 231" refer to the respective elements farthest from the OFI 210 along the corresponding optical fiber lines 232, 231.

In the illustrated example, the ratio of the optical power in the probe light to the optical power in the load channels 711, 721 is different in the outbound and return optical fiber lines, e.g. the OOF line 231 and the ROF line 232 of FIG. 2. Such operation may be achieved, e.g., using the optical filter 278, which may have different, e.g. greater, attenuation for the transmitted probe channels than the load channels. In some implementations, the *N*-th OLB path 270*_{N}* may be configured to block light in some or all of the probe channels from C₁ to C_{N-1} from entering the ROF line 232.

In the example configuration of the OF system 230 described above with reference to FIG. 2, light of the load channels, e.g. 711 and 721, when present at the input to the system, e.g. the OOF line 231, will be coupled into the sensor optical fibers, e.g. 242*ₙ* with n = 1,2, ... *N,* giving rise to the Rayleigh back-scattered load light directed along the corresponding OLB path, e.g., 270ₙ by the optical circulator 274. Similar to the backscattered light of the probe channels, the Rayleigh back-scattered load light has intensity noise distributed over the bandwidths of the respective load channels 711, 721. This intensity noise of the back-scattered load light may cause phase and polarization noise on the probe channels through cross-phase modulation (XPM) and cross-polarization modulation (XPolM). The group delay dispersion may cause some of this modulation to be averaged out, since the load light and the optical probe signals travel at different speeds through the ROF line 232. Signal in the probe channels that are spectrally close to the load channels may still be affected. The degradation of the probe channel signals due to the cross-modulation with the noisy load light may be reduced by increasing the load channel bandwidth to be much greater than the probe signal bandwidth *B*_{c}, e.g., to be greater than the probe channel spacing, thus spreading much of the cross-modulation intensity noise to frequencies that are outside of the detection bandwidth used in the optical receiver of the interrogating apparatus. In experiments where the probe signal full-width-half-maximum bandwidth was 80 MHz we have observed no measurable degradation with the 500 to 600 GHz load bandwidth shown in FIGs. 9A and 9B.

In some embodiments of the DOFS system of FIG. 2, the OLB paths 270*ₙ* may be configured to cause light of one or more of the load channels to bypass one or more of the sensor optical fibers 242*ₙ*, and to enter the return-path OA(s) 275, possibly via the optical preamplifier(s) 252. This may avoid the XPM and/or XPolM of the probe channel signals in the ROF line 232 otherwise caused by the Raleigh back-scattering induced intensity noise of the load light. In such embodiments, the bandwidth of the load channels that bypass the sensor optical fibers 242ₙ may be smaller, e.g. less than the probe channel spacing, thereby reducing requirements to the total OA bandwidth. In some embodiments, the load light spectrum may be broadened to suppress stimulated Brillouin scattering, e.g., by applying phase modulation with a moderate bandwidth (typically between 50 and 1000 MHz). In some implementations, the load channel(s) that stabilizes the gain of the OAs of the OOF line 231 may be different from the load channel(s) that stabilizes the gain of the OAs in the ROF line 232, and the load channel(s) intended for the ROF line 232 may not be intensity modulated in the OFI 210 to compensate for intensity and wavelength variation in the probe light 531.

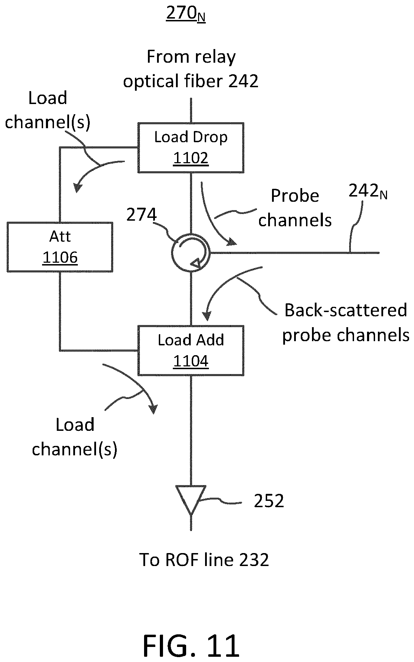

As illustrated in FIG. 11, in some embodiments the load light is separated from the probe pulses in the last OLB path 270_{N} with a wavelength-selective drop filter 1102 located upstream of the optical circulator 274, and rejoined with the back-reflected probe signals by a wavelength-selective add filter 1104, preferably before the input to the optical preamplifier 252. In some embodiments, the load light bypassing the optical circulator 274 may be suitably attenuated with an optical attenuator 1106.

In some embodiments, the OLB path 270_{N} may be configured to selectively block light of one or more load channels to prevent said light from entering the ROF line 232., e.g. using wavelength filtering somewhere along the OLB path 270_{N} or at the output of the nearest upstream OA 220. The load channel(s) being blocked may include, e.g. those of the load channels that are modulated to stabilize the gain of the OAs 220 of the OOF line 231.

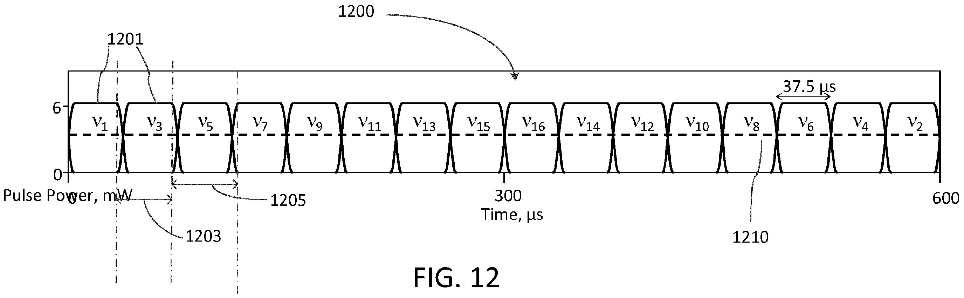

With reference to FIG. 12, in some embodiments an OFI, e.g. the OFI 110, 210, or 500 described above, may be configured to output probe light 1200 comprising a sequence of probe optical pulses 1201 of different wavelength channels (channel center wavelengths λ*ₙ*, channel frequencies *νₙ*=c/ λ*ₙ*). Start times of the optical pulses 1201 are equally spaced by a same time delay 1103. In this example, the transmission time delay 1203 between the consecutive probe optical pulses 1201 is somewhat smaller than the duration 1205 of each probe optical pulse 1201. Those of the probe pulses 1201 that are transmitted at consecutive start times temporally overlap at the edges, near start times and end times thereof. This is in contrast with the pulse sequence 700 of FIG. 7, where the duration of each pulse 703 does not exceed the time slot 701, with the time slot 701 defining the transmission time delay between consecutive starts times of the pulses 703 of the sequence. Here, "consecutive" refers to two pulses from a pulse sequence having consecutive start times. Once all *N* wavelength channels of the OFI are cycled through, the sequence of probe optical pulses 1201 is repeated.

In a preferred embodiment the probe optical pulses 1201 are suitably apodized, with the pulse shape and the transmission time delay 1203 selected to keep the optical power of the probe light 1200 approximately constant during the transmission of the pulse sequence, or at least half of a repeat period. Here, "approximately constant" means that variations of the optical power of the probe light, time-averaged over a window of at least 10 µsec, is within +\- 30%, or preferably within +\- 10%, of a mean value thereof. Avoiding power dips at transitions between consecutive pulses 1201 may simplify managing the gain dynamics of the OAs 220 of the OOF line 231. A pulse apodization time, i.e. the duration of the rising and falling edges of the probe pulse ("on/off transition times") may be relatively small, so as to reduce the overlaps between probe pulses of different wavelengths and thus to lessen the FWM. By way of example, the on/off transition times of a probe pulse may each be less than about 2 µsec, or preferably less than about 0.2 µsec. Very short apodization times may lead to the appearance of undesired side-lobes in the compressed signal at the output of the matched-filter processing. In some implementations, the OFI may be configured to correspondingly apodize the matched-filter impulse response used for the chirp compression, and/or to increase a chirp rate at the start and the end of the pulse, as described above with reference to FIG. 6. These measures may lessen the magnitude of the undesired side-lobes.

In some implementations, the probe optical pulses 1201 of different wavelength channels may be ordered such that the wavelength change between two subsequent pulses 1201 is minimized; this can for instance be achieved by ordering the channel frequencies νₙ of consecutive pulses 1201 from high to low or from low to high throughout the pulse sequence. Such ordering may reduce OA-induced distortions of the pulse shape for most of the probe pulses as they propagate in the OOF line being interrogated (e.g. OOF line 231), as reducing a wavelength change of input light tends to reduce changes in the steady-state spectral gain profile in the active (rare-earth doped) optical fibers of the OAs 220. Some OA gain instability may however occur when stepping from the end of one such pulse sequence to the start of the next pulse sequence. In some implementations, this may be mitigated, e.g., by adding a short time delay between consecutive ones of the pulses sequences and transmitting load light of a suitable power between the consecutive ones of the sequences, e.g. as described above with reference to FIG. 4A ("idle time" 407). The load light may be transmitted, e.g. in a load channel that is spectrally close to, but still separate from, the wavelength channel of the first probe pulse in the sequence. In another implementation, the probe light transmission may be stepped through, e.g., the odd numbered channels in one direction of wavelength change for a first half of the pulse sequence, followed by the even numbered channels in the opposite direction.

In some embodiments corresponding to FIG. 12, load channels might be omitted. In some other embodiments corresponding to FIG. 12, a single load channel may be used, which may or may not be modulated. Using one or more load channels alongside the sequence of overlapping probe optical pulses, such as e.g. the sequence of probe optical pulses 1201 of FIG. 12, may be helpful to suitably load the optical amplifiers in the return optical fiber line, e.g. the OAs 275 of the ROF line 232 of FIG. 2, and possibly to control the wavelength and time dependence of the OA gain of the OF line being interrogated, e.g. OAs 220 of the OOF line 231 of FIG. 2. A potential disadvantage of the overlapping pulse configuration of FIG. 12 is the generation of FWM-induced sidelobes in the optical spectrum of the return light, and consequences thereof. The FWM may be somewhat lessened using non-uniform frequency spacing between the probe channels.

Note that at least some of the features described above with reference to specific examples of DOFS systems can also be used in optical systems that differ in some aspects from the ones described above. Such other DOFS systems include, for instance, various distributed sensing systems that use pulsed or intensity modulated interrogation light to interrogate optical fibers, such as but not limited to Raman DTS systems, distributed Brillouin sensing systems, pulsed OTDR systems, pulsed interferometer interrogation systems, pulsed FBG interrogation systems. E.g., all of the above DOFS systems may be configured to use amplified multi-segment relay optical lines with separate sensor optical fibers coupled to at least some of the relay fiber segments.

Furthermore, at least some of the features described above with reference to specific examples of DOFS systems may be used in long-haul submarine telecom systems. E.g. DAS can be added for submarine telecom cable threat monitoring by dedicating a separate fiber pair for DAS to establish a surveillance system that generates early warnings if a potential threat is detected in the vicinity of the submarine telecom cable. Dedicated submarine DAS sensing cables may also be installed alongside, or piggybacked to electricity power cables, or seabed hydrocarbon carrying pipelines, for, e.g., detection and localization of leaks or electrical faults, and/or for cable or pipeline threat monitoring. The DAS sensing capabilities of such a system can also contribute to the SMART cables initiative where environmental sensing in introduced to submarine telecom systems for oceanographic and climate research objectives. In this respect, DAS can contribute with oceanographic observations on mammals, earthquakes, tsunamis, temperature or strain fluctuations etc.

Various features of the distributed optical fiber sensors described above with reference to specific examples may be used, e.g., inside telecom cables on a dedicated fiber pair or alternatively may constitute a dedicated cable system for the sole purpose of sensing.

While this disclosure includes references to illustrative embodiments, this specification is not intended to be construed in a limiting sense, and various modifications of the described embodiments will be evident to those skilled in the art based on the present specification. For example, some embodiments may include more than two load channels with temporally varying load light; e.g. a third load channel may be added spectrally between the first and second load channels to define two separate wavelength ranges for the OFI signal channels. Some embodiments may include only one load channel, or no load channels at all.

Furthermore, some embodiments may use probe light, e.g. 101 or 201, of a same wavelength to interrogate all of the sensor optical fibers. In such embodiments, the OFI, e.g. 110 or 120, may be, e.g., a single OFI 600 (FIG. 6). The optical transmitter, e.g. 112 or 212, may be configured to operate in a single wavelength channel, transmitting an optical probe signal with a sufficiently large sampling period *Tᵣ* that is at least equal to a photon round-trip in the multi-segment optical fiber line, including all segments thereof being interrogated. The OFI, e.g. 110 or 120, and the optical receiver thereof, e.g. 114 or 214, may be configured to distinguish between the back-scattered light received from different ones of the sensor optical fibers, e.g. 142*ₙ* or 242*ₙ*, based on a time delay at the OFI from the transmission of an optical probe signal to the reception of the back-scattered light thereof. By way of example, in an optical fiber line 230 having *N*=3 optical segments 240, each including a relay optical fiber and a sensor optical fiber, each *L*=60 km long, for a total propagation length *N·L* of 180 km, the transmitter 212 may be configured to generate a sequence of optical probe pulses with a sampling period *Tᵣ* approximately equal to *2NLn_{g}*/*c* ~ 1.8 millisecond (msec); at the receiver 214; here *n_{g}* is the group refractive index of light in the optical fibers. Light received during each consecutive third (2*Ln_{g}*/*c* ∼ 0.6 msec) of this time interval *Tᵣ* may be due to back-scattering in a corresponding one of the three sensor optical fibers 242*ₙ*, *n* =1, 2, 3. In such embodiments, the OLB paths 270*ₙ* and the add-couplers 277*ₙ*, don't have to be wavelength-selective, e.g. may be embodied as directional couplers.

Furthermore, in some embodiments one or more wavelength channels may each be allocated to interrogate multiple sensor optical fibers. In such embodiments, the OLB paths of a corresponding subset of the sensor optical fibers, e.g. 242*ₙ*, 242_{*n*+1}, ... 242_{*n*+}*_{M}, M*≥2*,* may be configured to selectively couple back-scattered light of a same allocated wavelength channel, e.g. C*ₖ* with a center wavelength λ*ₖ*, from each of the sensor optical fibers of the subset to the ROF line. E.g., all of the corresponding OLB paths, e.g. 270*ₙ*, 270_{*n*+1},... 270_{*n*+*M*}, may include a passband filter that substantially blocks all of the probe channels except the wavelength channel allocated to the subset. The optical add-couplers of the corresponding OLB paths, e.g. 277*ₙ*, 277_{*n*+1}, ... 277_{*n*+}*_{M},* don't have to be wavelength-selective, e.g. may be embodied as directional optical couplers. In some embodiments, one of the optical add-couplers of the subset that is farthest from the OFI, e.g. 277_{*n*+}*_{M},* may be embodied as described above with reference to FIGs. 3A-3C. The sampling period *Tᵣ* may be sufficiently long to allow the complete responses from all of the sensor optical fibers of the subset allocated to the wavelength channel λ*ₖ*, e.g. 242*ₙ*, 242_{*n*+1}, ..., be received by the OFI, e.g. 210, without a temporal overlap therebetween. The round-trip time delay from the OFI to the individual sensor optical fibers of the subset may be configured to avoid such temporal overlaps, e.g. by having the sensor optical fibers of the subset to be connected consecutively to the relay optical line.

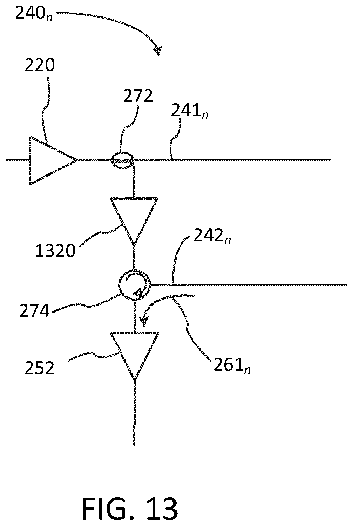

Furthermore, some embodiments may include a booster optical amplifier configured to selectively amplify light directed in at least one of the sensor optical fibers, e.g. 142*ₙ* (OOF 130 of FIG. 1) or 242*ₙ* (OOF 231 of FIG. 2), relative to light directed into the relay optical fiber of the corresponding optical segment, e.g. 140*ₙ* or 240ₙ, *n* =1, 2,..., or *N*. This is illustrated in FIG. 13, showing an example of an optical segment 240ₙ of the OOF line 231 FIG. 2 having a booster optical amplifier 1320 connected between the optical splitter 272 and the optical circulator 274 to selectively amplify light directed into the optical fiber 242*ₙ*. In this embodiment, the optical splitter 272 may direct at least as much or more optical power into the relay optical fiber 241*ₙ* as into the sensor optical fiber 242*ₙ* of the same optical segment 240 *ₙ*, *n* =1, 2,..., or *N.* By way of example, the optical splitter 272 in such embodiments may direct two to ten times more optical power into the relay optical fiber 241*ₙ* than into the sensor optical fiber 242*ₙ*.

Furthermore, other optical couplers may be used instead of circulators 274 to extract back-reflected light from optical fibers in the example OF system described above. Also, a circulator may be used instead of a directional optical coupler in the add-couplers 277. Either multi-stage or single-stage optical amplifiers may be used for the OAs 220, 252, 275. Furthermore, one or more of the OAs 220, 252, 275 may be implemented using Raman amplification in the optical fibers 241, 260 of the OOF and the ROF lines, or using discrete Raman amplifiers where the amplifying fiber is contained within the amplifier unit. In some embodiments, one or more of the OAs 220, 252, 275 may be implemented using semiconductor optical amplifiers (SOAs). Extra amplifiers may be added in certain paths, for instance in the path between the output of a return-path OA 275 and a downstream add-coupler 277. Some of the optical segments of the DOFS system may lack a separate sensor optical fiber, with the back-reflected light being sourced for sensing from the one or more relay optical fiber of the segment. In some embodiments, one or more coupler 272 may branch out to multiple sensor fibers, potentially measuring different quantities and/or at different locations, where the backscatter of at least one channel from each sensor fiber is amplified and added into the ROF line 232. In some embodiments some of the couplers 272 may be a drop filter. In some embodiments some of the couplers 272, 270 may be grating-assisted add/drop couplers. Various other modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

An example embodiment described above, e.g. in the summary section and with reference to any one or more of the FIGs. 1-12, provides an apparatus. The apparatus comprises a distributed fiber optic sensor (e.g. 100, 200) comprising an optical fiber line (e.g. 130, 231) and an optical interrogator (e.g. 110, 210, 500) connected to transmit probe light (e.g. 101, 201, 531, 831) to the optical fiber line. The optical fiber line comprises a sequence of optical segments (e.g. 140, 240), some of the optical segments having both a relay optical fiber (e.g. 141, 241) and a sensor optical fiber (e.g. 142, 242), first ends of the relay and sensor optical fibers being optically connected to a previous one of the optical segments of the sequence, a second end of the relay optical fiber being optically connected to a subsequent one of the optical segments of the sequence. The optical fiber line is configured to cause optical amplification of the probe light along and/or between the optical segments. The optical interrogator is connected to receive part of the probe light back scattered in each sensor optical fiber of the optical segments.

In some implementations, one of the optical segments (e.g. 240₂) is such that more of the power of said probe light is received by the sensor optical fiber (e.g. 242₂) of the one of the optical segments than by the relay optical fiber (e.g. 241₂) of the one of the optical segments.

Any of the above implementations may comprise a plurality of optical amplifiers (e.g. 220) end-connecting consecutive ones of the relay optical fibers (e.g. 241₁, 241₂). In some of such implementations, an optical splitter (e.g. 272) connects an output of one of the optical amplifiers (e.g. 220) to first ends of the relay and sensor optical fibers (e.g. 241₂, 242₂) of the one of the optical segments. In some of such implementations, the optical splitter (e.g. 272) is configured to direct more light power to the sensor optical fiber (e.g. 242₂) of the one of the optical segments than to the relay optical fiber (e.g. 241₂) of the one of the optical segments.

Any of the above implementations may comprise an optical circulator (e.g. 274) connected to the first end of the sensor optical fiber (e.g. 242₁, 242₂, ..., or 242*_{N}*) of one of the optical segments.

In any of the above implementations, the optical interrogator (e.g. 110, 210, 500) may be configured to transmit optical probe signals of different wavelength channels (e.g. 931) and to obtain sensing information about one of the sensor optical fibers (e.g. 142*ₙ*, 242*ₙ*) from back-scattered light (e.g. 151*ₙ*, 262*ₙ*, 533*ₙ*) of a corresponding one of the wavelength channels. In some of such implementations, the optical interrogator may be configured to transmit the optical probe signals such that the optical probe signals of the different wavelength channels have different start times (e.g. 401, *tₖ*)*.*

Any of the above implementations may further comprise a plurality of optical loop-back paths (e.g. 270₁, ..., 270*_{N}*) to direct back-scattered light (e.g. 262₁, ..., 262*_{N}*) of corresponding ones of the wavelength channels from the sensor optical fibers (e.g. 242₁, ..., 242*_{N}*) to a return optical fiber line (e.g. 232), the return optical fiber line being connected to return light from the sensor optical fibers (e.g. 242₁, ..., 242*_{N}*) to the optical interrogator (e.g. 210).

In any of the above implementations comprising the return optical fiber line (e.g. 232), the return optical fiber line may comprise a sequence of optical fiber segments (e.g. 260₁, 260₂, ..., 260_{*N*-1}) end-connected via optical amplifiers (e.g. 275).

In any of the above implementations, the optical interrogator may further comprise one or more load light sources (e.g. 213, 810, 820) connected to transmit load light to the optical fiber line (e.g. 231). In some of such implementations, the optical interrogator (e.g. 210, 500) may be configured to vary the power of the load light transmitted from the load light sources in time.

In any of the above implementations comprising one or more load light sources, one of the optical loop-back paths (e.g. 270_{N}) may be configured to couple the load light from at least one of the one or more load light sources (e.g. 213) to the return optical fiber line (e.g. 232) via a bypass of the one of the sensor optical fibers (e.g. 242_{N}) connected to said loop-back optical path, the one of the sensor optical fibers being in the last optical segment (e.g. 240_{N}).

In any of the above implementations, at least one optical segment (e.g. 140*ₙ*, 240*ₙ*) may include a booster optical amplifier (e.g. 1320) to selectively amplify light launched into the sensor optical fiber (e.g. 142 *ₙ*, 242*ₙ*) of the at least one of the optical segments.

In any of the above implementations, at least one of the sensor optical fibers (e.g. any one of 242₁, ...,_{,} 242_{N}) may be at least 40 km long. In any of the above implementations, the optical interrogator (e.g. 110, 210, 500) may be configured to perform distributed acoustic sensing along the sensor optical fibers.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus, comprising:
a distributed fiber optic sensor comprising an optical fiber line and an optical interrogator connected to transmit probe light to the optical fiber line; and
wherein the optical fiber line comprises a sequence of optical segments, some of the optical segments having both a relay optical fiber and a sensor optical fiber, first ends of the relay and sensor optical fibers being optically connected to a previous one of the optical segments of the sequence, a second end of the relay optical fiber being optically connected to a subsequent one of the optical segments of the sequence;
wherein, the optical fiber line is configured to cause optical amplification of the probe light along and/or between the optical segments; and
wherein the optical interrogator is connected to receive part of the probe light back scattered in each sensor optical fiber of the optical segments.

2. The apparatus of claim 1, wherein one of the optical segments is configured such that more of the power of the probe light is received by the sensor optical fiber of the one of the optical segments than by the relay optical fiber of the one of the optical segments.

3. The apparatus of claim 1 or 2, wherein the optical interrogator is configured to transmit optical probe signals of different wavelength channels and to obtain sensing information about at least one of the sensor optical fibers from back-scattered light of a corresponding one of the wavelength channels.

4. The apparatus of claim 3, wherein the optical interrogator is configured to transmit the optical probe signals such that the optical probe signals of the different wavelength channels have different start times.

5. The apparatus of claim 3 or 4 further comprising a plurality of optical loop-back paths to direct back-scattered light of corresponding ones of the wavelength channels from the sensor optical fibers to a return optical fiber line, the return optical fiber line being connected to return light from the sensor optical fibers to the optical interrogator.

6. The apparatus of any one of claims 1 to 5 comprising an optical circulator connected to the first end of the sensor optical fiber of one of the optical segments.

7. The apparatus of any of claims 1 to 6 further comprising a plurality of optical amplifiers end-connecting consecutive ones of the relay optical fibers.

8. The apparatus of claim 7, comprising an optical splitter connecting an output of one of the optical amplifiers to first ends of the relay and sensor optical fibers of the one of the optical segments, the optical splitter being configured to direct more optical power toward the sensor optical fiber of the corresponding one of the optical segments than to the relay optical fiber of the corresponding one of the optical segments.

9. The apparatus of any one of claims 1 - 8, wherein the optical interrogator further comprises one or more load light sources connected to transmit load light to the optical fiber line.

10. The apparatus of claim 5 further comprising the return optical fiber line, the return optical fiber line comprising a sequence of optical fiber segments end-connected via optical amplifiers.

11. The apparatus of claim 9, wherein the optical interrogator is configured to vary the power of the load light transmitted from the load light sources in time.

12. The apparatus of claim 5 further comprising one or more load light sources connected to transmit load light to the optical fiber line; and
wherein one of the optical loop-back paths is configured to couple the load light from at least one of the one or more load light sources to the return optical fiber line via a bypass of the one of the sensor optical fibers connected to said loop-back optical path, the one of the sensor optical fibers being in the last optical segment.

13. The apparatus of any one of claims 1 - 12, wherein at least one of the optical segments comprises a booster optical amplifier to selectively amplify light launched into the sensor optical fiber of the at least one of the optical segments.

14. The apparatus of any one of claims 1 to 13 wherein at least one of the sensor optical fibers is at least 40 km long.

15. The apparatus of any one of claims 1 to 14 wherein the optical interrogator is configured to perform distributed acoustic sensor along the sensor optical fibers.
